# EUROPEAN PATENT APPLICATION

(11) **EP 3 333 815 A1**
(43) Date of publication of application: **13.06.2018**
(21) Application number: 17205364.7
(22) Date of filing: 05.12.2017
(51) Int. Cl.: G07F 13/10, B65G 59/10, A23G 9/28

(54) **DEVICE FOR PREPARING AND DELIVERING A CONE OR CUP OF ICE CREAM**

(30) Priority: 09.12.2016 IT 201600124688
(71) Applicant: Ilventitrè S.r.l., 24121 Bergamo (BG) (IT)
(72) Inventor: PANZERI, Lucio, 24030 MAPELLO (BG) (IT)
(74) Representative: Fabiano, Piero

(57) **Abstract**

A device (1) and a related method for preparing and delivering a cone or cup containing ice cream (10) comprising a plurality of tubs (2) for containing the ice cream (10), a delivery station (3) for delivering a cone or cup (30) containing the ice cream (10), at least one element (4) for picking the ice cream up, preferably having the shape of scoop or spoon, a stock (5) of cones and/or cups (30), at least one restraining element (103), preferably a movable one, adapted to receive a cone or cup (30) from said stock (5), a robot (100), preferably of the substantially anthropomorphous type, equipped with a first arm (101) provided with a movable portion (101a) equipped with, or couplable to, at least one of said elements (4) for picking the ice cream (10) up, receiving means (7) to receive user's commands, wherein said movable portion (101a) can be moved from a picking up position to insert at least partially said element (4) for picking the ice cream up in one of said tubs (2) so that a loose ice cream portion is picked up, and a preparation position to arrange said ice cream portion in one of said cones or cups (30) restrained in said restraining element (103), is described.

## Description

### Field of the Invention

The present invention concerns the field of preparing and dispensing ice cream cones and cups.

### Known Prior Art

The so called "vending machines" or dispensing machines, that are able to deliver packaged products such as beverages or hot/cold packaged food, are known in the art. The pre-packaged ice creams that can thus be purchased by the users at any time or however independently of the presence of a human seller, are also included among such products.

However, generally the pre-packaged ice creams don't meet a quality comparable to that of the homemade ice cream. Furthermore, it is a typical characteristic of the homemade ice cream to be able to customize as you like flavors making the final product, whereas pre-packaged ice creams only offer predetermined combinations.

Preparing a cone or cup with homemade ice cream requires some attention from the operator, on which the quality of the final product depends. In particular, a badly prepared ice cream (mostly an ice cream cone), besides being not comfortable to eat, may also fall and/or dirty the end user, for example when the ice cream is badly balanced on the cone. Furthermore, ice creams delivered by the operator in different deliveries could be different among each other both in terms of quality and amount of ice cream.

Moreover, the presence of an operator close to foodstuff in bulk should require some precautions by the operator, such as for example the use of gloves, hair nets and the like, to avoid hygienic-sanitary issues due to possible contamination of the loose ice cream.

### Summary of the Invention

Thus, it is an object of the present invention to solve the problems of the known art.

It is a particular object of the present invention to provide a device and a related method for preparing and delivering to a final user an ice cream cone or cup, i.e. a cone or cup containing the loose ice cream, typically homemade ice cream, that could work independently of the human labor.

It is a further object of the present invention to provide a device and a related method for preparing and delivering to a final user an ice cream cone or cup which is repetitively uniform and with high quality between subsequent operations.

It is a further object of the present invention to provide a device and a related method for preparing and delivering to a final user an ice cream cone or cup that could ensure high hygienic-sanitary standards.

These and other objects are solved by a device according to claim 1. Preferred aspects are set forth in dependent claims.

According to an aspect of the present invention, the device for preparing and delivering a cone or cup containing ice cream comprises:
- a plurality of tubs for containing the ice cream;
- a delivery station for delivering a cone or cup containing the ice cream;
- at least one element for picking the ice cream up, preferably having the shape of scoop or spoon;
- a stock of cones and/or cups;
- at least one restraining element, preferably a movable one, adapted to receive a cone or cup from the stock;
- a robot, preferably of the substantially anthropomorphous type, equipped with a first arm provided with a movable portion adapted to move the elements for picking the ice cream up;
- receiving means to receive user's commands.

The movable portion can be moved between a picking up position and a preparation position. The picking up position is adapted to insert at least partially the element for picking the ice cream up in one of the tubs so that a loose ice cream portion is picked up. The preparation position is adapted to arrange the ice cream portion in one of the cones or cups restrained in the restraining element.

The movable portion of the first arm can be equipped with an element for picking the ice cream up or couplable to at least one of the elements for picking the ice cream up.

Preferably, the robot is equipped with two arms, the first arm is provided with a grasp suitable to hold the elements (scoop or spoon) appointed to pick the ice cream up, the second arm is able to restrain the cone (or cup) received from the stock. In this embodiment both arms are equipped with movable portions that allow switching from the cone picking up position to the point where the elements are held for picking the ice cream up from the tubs, in order to subsequently pick up a loose ice cream portion, switch to the preparation position to arrange the ice cream portion in a cone or cup restrained by the device mentioned above.

Preferably, the first arm has at least three degrees of freedom, preferably at least five degrees of freedom, more preferably at least seven degrees of freedom.

In case the robot is equipped with two arms, both arms preferably have the same number of degrees of freedom.

According to a particular aspect of the present invention, one or more of the elements for picking the ice cream up is reversibly couplable to the movable portion of the first arm. In particular, the device comprises at least one supporting element to support one or more elements for picking the ice cream up, wherein the movable portion of the first arm can be further moved to a recovery position of the element for picking the ice cream up, in order to selectively constrain and release itself to/from the afore said element for picking the ice cream up.

Advantageously, the supporting element is designed so that the element for picking the ice cream up is kept at least partially inside one of the tubs.

Preferably, the tubs are movable with respect to the robot.

Advantageously, the restraining element of the cones is assembled on the movable portion of the second arm.

Preferably, the robot comprises a body at least rotatably movable with respect to the plurality of tubs. At least the first arm is constrained to the afore said body. Preferably, also the restraining element is constrained to the afore said body.

Preferably, the device comprises at least one station provided with at least one part of the afore said tubs. The tubs being rotatable around the main development axis of the station. More preferably, the station has a substantially cylindrical shape.

According to a particular aspect of the present invention, the device comprises at least two of the afore said stations. Advantageously, the movable body of the robot is arranged between the afore said two stations.

Preferably, the movable portion of the first arm comprises a male element that can be introduced in a female element of the element for picking the ice cream up, or vice versa, whereas the movable portion of the second arm comprises a clamp, preferably a pneumatic clamp, for picking the cone up.

It is a further object of the present invention a method for preparing and delivering an ice cream cone or ice cream cup by means of a device according to one or more of the above mentioned aspects. The method comprises the steps of:
(a) receiving a user's command by the receiving means, the command comprising at least one piece of information about the type of ice cream to be prepared;
(b) moving the first arm to the picking up position so that a loose ice cream portion is picked up from the tubs, depending on the command received in step (a);
(c) receiving or picking up a cone or cup from the stock in the restraining element;
(d) moving the first arm to a preparation position to arrange the ice cream portion in one of the cones or cups restrained in the restraining element, depending on the command received in step (a);
(e) delivering to a user the cone or cup containing the ice cream prepared in step (d).

### Brief description of the figures

With reference to the attached figures, an exemplary and not limiting embodiment of the present invention is now discussed, wherein:
- figure 1 is a perspective view of an embodiment of the present invention;
- figure 2 is a plan view of the embodiment of figure 1, with further elements shown schematically;
- figure 3 is a detailed view of the tubs for the ice cream of the embodiment of figure 1;

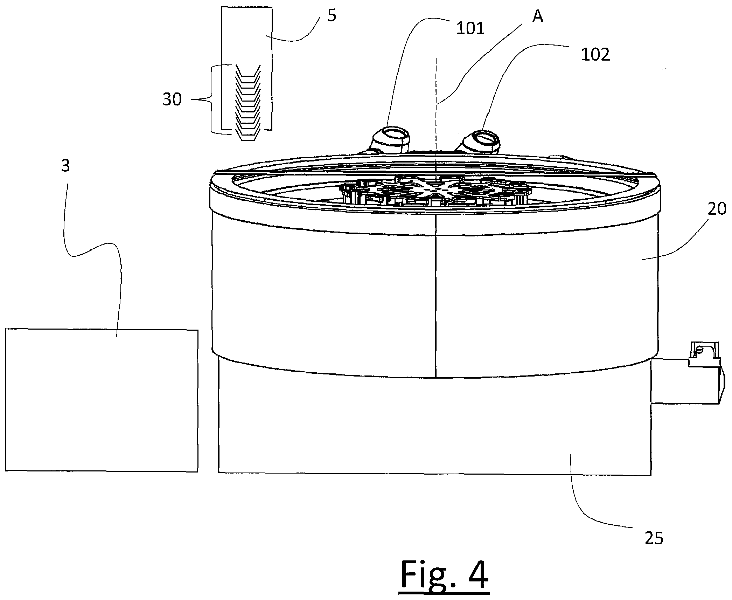

- figure 4 is a side view of the embodiment of figure 1,with further elements shown schematically;
- figure 5 is a perspective view of the robot of the embodiment of figure 1;
- figure 6 is an enlarged view of the first arm of the robot of figure 5;
- figure 7 is an enlarged view of the second arm of the robot of figure 5;
- figure 8 is a partial view of the first arm of the robot of figure 5, in the position for picking the ice cream up;
- figure 9 is a partial view of the first arm of the robot of figure 5, in the position for preparing the ice cream.

### Embodiments of the invention

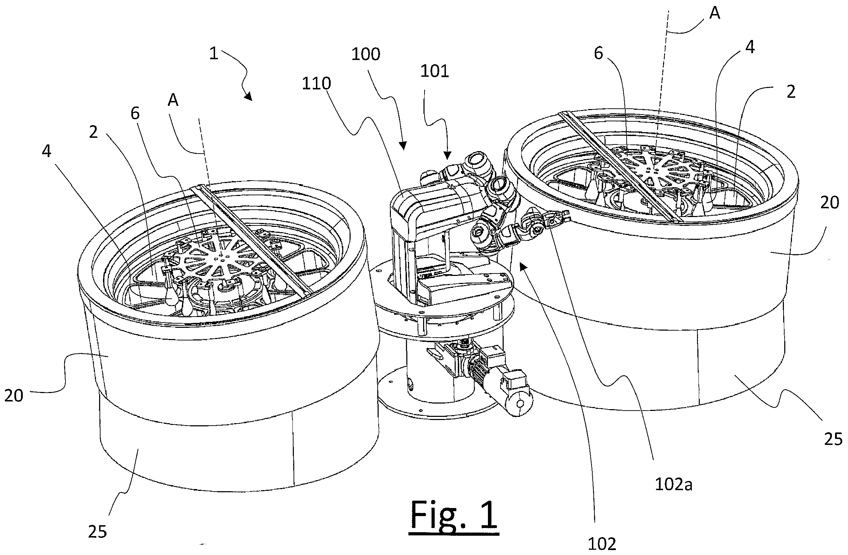

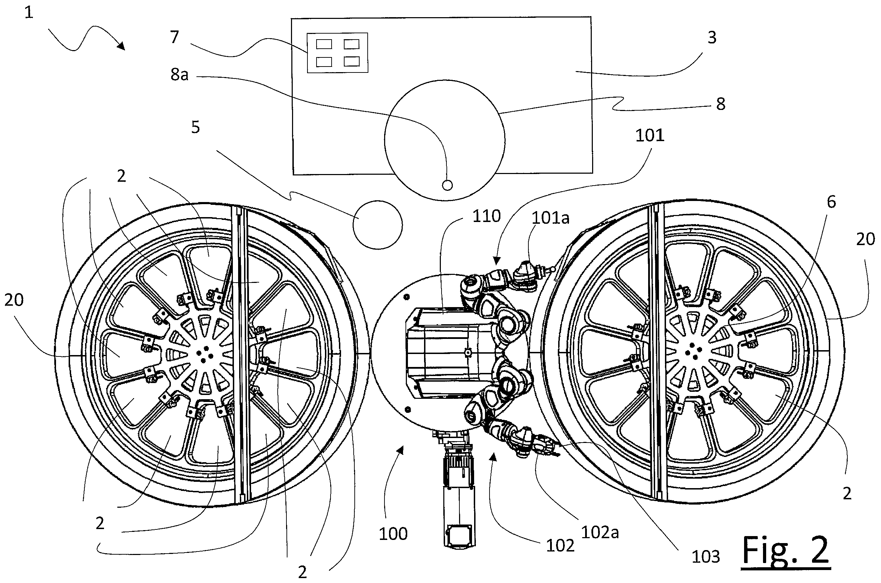

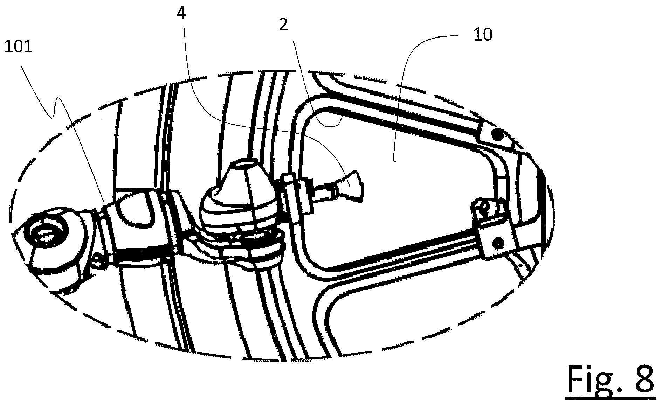

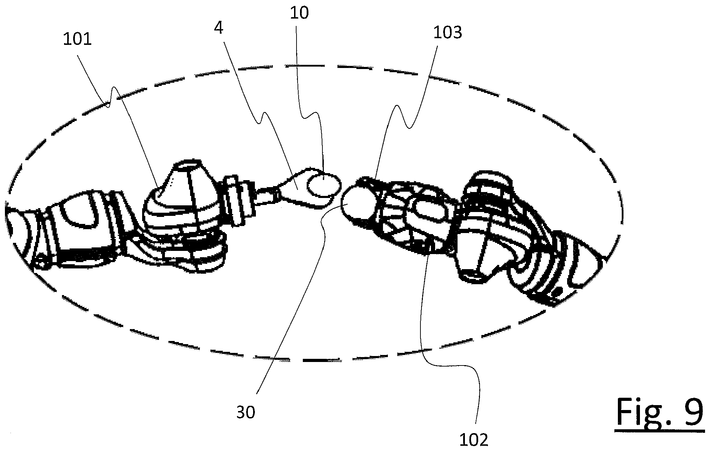

With reference to figures 1 and 2, the device 1 for preparing and delivering an ice cream cone or cup comprises a plurality of tubs 2 for containing the loose ice cream 10 (visible in figures 8 and 9). Typically, different tubs house different types (i.e. flavors) of loose ice creams.

The tubs 2 can be arranged according to different arrangements. In the shown embodiment, there are two stations 20 to house the tubs 2. However, further embodiments can provide a different number, for example a higher number, of stations 20. It is further possible an embodiment wherein there is a single station 20 housing all of the tubs 2.

The stations 20 shown in the figures are substantially identical, therefore herein below the description is made for a single station 20. In the shown embodiment, each station 20 has tubs 2 radially arranged around the main development axis A (from now on also "Axis A") of the station 20, i.e. they are placed so to surround the Axis A of the station 20. However, different arrangements are possible. For example, the tubs could be linearly arranged inside the station 20. Alternatively, the tubs could be arranged in rows and columns inside the station 20. In general, the station 20 is designed so that to house the tubs 2 adapted to contain loose ice cream 10. Furthermore, as shown in figure 2, each station 20 has twelve tubs 2. A different number of tubs 2 can be provided in different embodiments of the present invention, not shown in figures.

Preferably, the tubs 2 are movable inside the station 20. In the shown embodiment, the tubs 2 are rotatable around the Axis A of the station 20. The axis A is typically outside the tubs 2 so that, during the rotation, these are moving along a circular path. Other types of movement are possible, in particular in case the arrangement of the tubs 2 inside the station 20 is different with respect to the shown embodiment, for example, the tubs 2 could simply be alternatively shifted along a substantially linear path.

Specific means known in the art and not shown, can thus be provided for moving the tubs 2. For example, the tubs can be arranged on a rotatable element by means of an engine, or else can be arranged on a conveyor belt, etc.

The station 20 can have different shapes depending on the embodiment and the arrangement, and possibly depending on the desired movement for the tubs 2 inside the station 20 itself.

In an embodiment shown in the figures, the station 20 has cylindrical shape. In particular, such a shape is particularly advantageous when the tubs 2 have cylindrical arrangement and/or movement.

According to an aspect, the station 20 has main development axis that, in use, is angled with respect to the vertical. As it is known, by "vertical" is meant a straight line perpendicular to the ground, i.e. perpendicular to the support plane on which the device 1 is arranged. In the embodiment shown in the figures, the station 20 is placed on a pedestal 25, so that the axis A is angled as previously discussed.

Typically, the station 20 is at least partially open on top so that accessing to the tubs 2 from outside is allowed. Alternatively, the station 20 can have an element for reversibly closing the station 20, so that it is possible to close the top of the station 20 when accessing to the tubs 2 is not necessary, and it is possible to open the station 20 instead when operating on the tubs 2 is necessary, for example for picking up loose ice cream 10. Thus, the station 20 can have an element, partially or completely (in this case, as mentioned, reversibly) covering, typically transparent so that an outside user can see the tubs 2, and in particular the loose ice cream 10 contained therein.

There are also means, known in the art and not showed in detail in the figures, to keep the tubs 2 and the loose ice cream 10 at low temperature allowing an optimal preservation of the loose ice cream 10.

The device 1 further comprises a stock 5 of cones and/or cups 30, or analogous elements, edible and non-edible, which are adapted to contain the ice cream 10 to allow its consumption by a user. In the embodiment shown in the figures cups 30 are schematically depicted, even if the following description is applicable to various elements discussed above which are adapted to contain the ice cream 10.

The stock 5 can have various shapes known in the art. Typically, the cones/cups 30 are vertically stacked, and a specific actuator device, not shown, allows the delivery (for example by gravity) of a single cone/cup 30 from a lower opening of the stock 5. The device 1 is further provided with at least one restraining element 103, better described herein below, adapted to receive the cone/cup from the stock 5 and to restrain it during the introduction of the ice cream 10 inside the cone/cup 30.

The device 1 comprises a robot 100, better discussed herein below, by means of which the cone/cup 30, previously delivered from the stock 5, is filled with ice cream 10.

The device 1 has a delivery station 3, i.e. a station where it is possible to deliver to a user the cone/cup 30 previously filled with ice cream 10. The delivery station 3 may comprise means 8 for restraining the cone/cup 30 before the latter is delivered to a user. In the shown embodiment, such means comprise a rotating platform 8 provided with one or more openings 8a, which are adapted to house the cone/cup 30. In particular, the platform 8 can be moved to a first position wherein the opening 8a is facing the robot 100, better discussed herein below, adapted to prepare the cone/cup 30 containing the ice cream 10, and a second position wherein the opening 8 is facing a user, so that to allow him to pick up the cone/cup 30 containing the ice cream 10. As an alternative to the rotating platform 8, it is possible to provide an analogous, fixed or movable, supporting element for example provided with openings adapted to contain the cone/cup 30.

Furthermore, in alternative embodiments, the delivery station 3 could be without the means 8, for example in case the robot 100 delivers the cone/cup 30 directly to a user.

The device 1 is further provided with at least one element 4 for picking the ice cream 10 up from the tubs 2. Typically, such picking up elements 4 have the shape of scoop or spoon, or however they have a shape adapted to allow introducing them into the ice cream 10 and picking up an ice cream portion 10 from the tubs themselves.

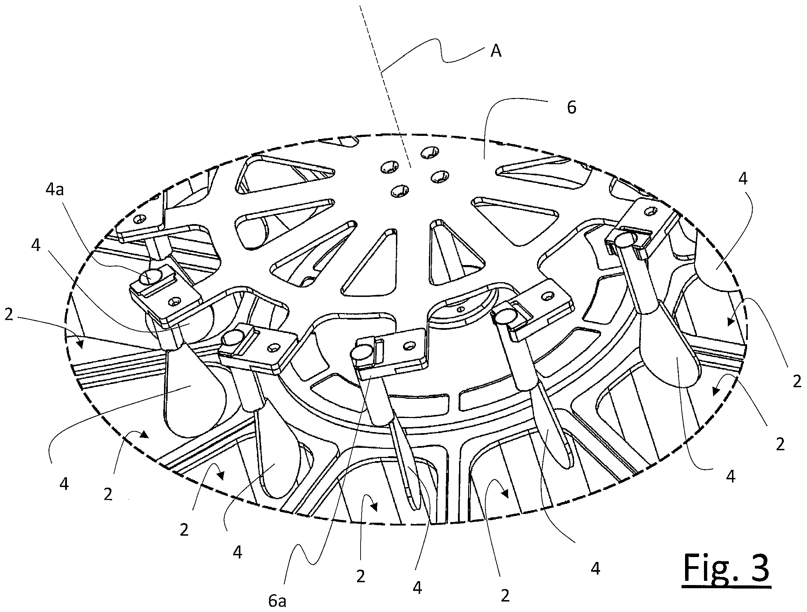

In a possible embodiment the robot 100, better discussed herein below, can be provided with one or more picking up elements 4. However, preferably the picking up elements 4 are outside the robot 100 and are designed so that they could be reversibly constrained thereto. Typically, the picking up elements 4 and the robot have a male-female coupling. In the shown embodiment, the picking up elements 4 have a female element 4a (depicted in figure 3 only for a single picking up element 4, for simplicity of viewing), in which a male element (or protrusion) 101b of the robot 100, discussed herein below, can be introduced. More in detail, in the shown embodiment, the female element has a hollow handle 4a adapted to house the protrusion 101b of the robot.

According a preferred embodiment, as shown in the figures, the female element is on the picking up element 4, whereas the protrusion is on the robot, even if it is possible to provide the opposite solution.

As mentioned, the picking up element 4 is typically separated from the robot 100. In such a case it is preferred to provide a picking up element 4 per each tub 2 housing the ice cream 100, so that a single picking up element 4 is not introduced into different tubs 2, thus causing undesired blending of the ice cream flavors 10.

Thus, the device 1 can be equipped with at least one supporting element 6 for restraining the picking up element 4 when the latter is in use. In a possible embodiment, the supporting element 6 has a plurality of forks 6a adapted to be reversibly constrained with the picking up elements 4, typically with the handle 4a thereof. In figure 3 the forks of only one supporting element 6 are denoted with the reference number 6a, for simplicity of viewing.

The supporting element 6 is further designed so that, when it restrains a picking up element 4, the latter is at least partially inserted into the tubs 2, typically without contacting the ice cream 10. This allows maintaining the picking up element 4 at an optimal temperature to ease the introduction of the element 4 into the tubs 2 and picking the ice cream 10 up from the tubs themselves.

Preferably, as in the shown embodiment, the picking up element 4 is restrained at one of its ends, so that the opposite end is partially inserted in the respective tub 2, above the ice cream 10. In other words, when the handle of the picking up element 4 is restrained by the supporting element 6, at least part of the opposite end of the picking up element (that preferably is made of thermal conductive material, for example metal material) is arranged below a level wherein the temperature is substantially equal to that one of the ice cream contained inside the tub 2.

The device 1 is further provided with receiving means 7 to receive user's commands. Such receiving means 7 are known in the art and are schematically shown in the figures. In particular, such means can have various shapes, such as for example a keyboard, a touch-screen. Alternatively, the device 1 can be provided with means 7 able to communicate with a user's device, for example a smartphone (not shown). For example, the device 1 can be provided with a Bluetooth interface able to receive commands the user inputs on his own device by means of a specific graphical interface. Thus, in general the means 7 include any component form adapted to directly or in directly (for example by means of a wireless interface) receive user's commands.

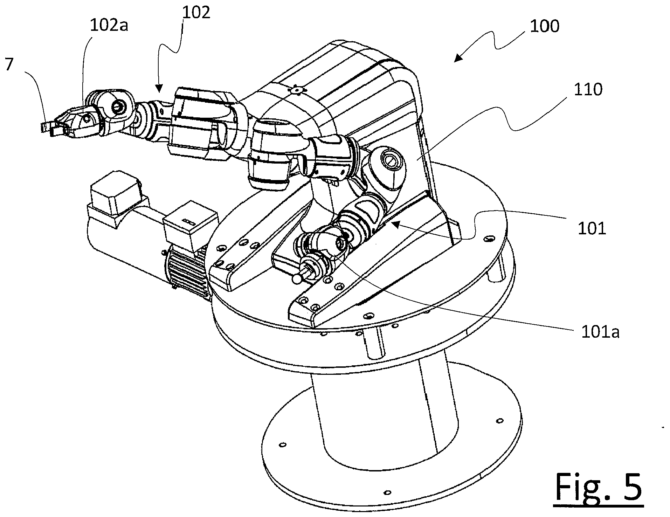

With reference to figure 5, the device 1 comprises a robot 100 by means of which a cone/cup 30, previously picked up or delivered from the stock 5, is filled with ice cream 10. By "robot" is meant any machine (more or less anthropomorphic) able to perform, more or less independently, a job instead of a human.

The robot 100 comprises a first arm 101 provided with a movable portion 101a equipped with an element 4 for picking the ice cream up. Preferably, the movable portion 101a is couplable to the elements 4 for picking the ice cream up. As previously described, the movable portion 101a can be coupled to the elements 4 by means of a male-female coupling between a hollow portion 4a of the handle (female element) and a protrusion 101b (male element) arranged on the movable portion 101a of the robot 100. In this embodiment, the movable portion 101a can be moved from a rest position (shown for example in figure 1), wherein the movement of the tubs 2 inside the stations 20 is allowed, to a recovery position wherein the protrusion 101b is inserted inside the hollow portion 4a of the element 4 for picking the ice cream up.

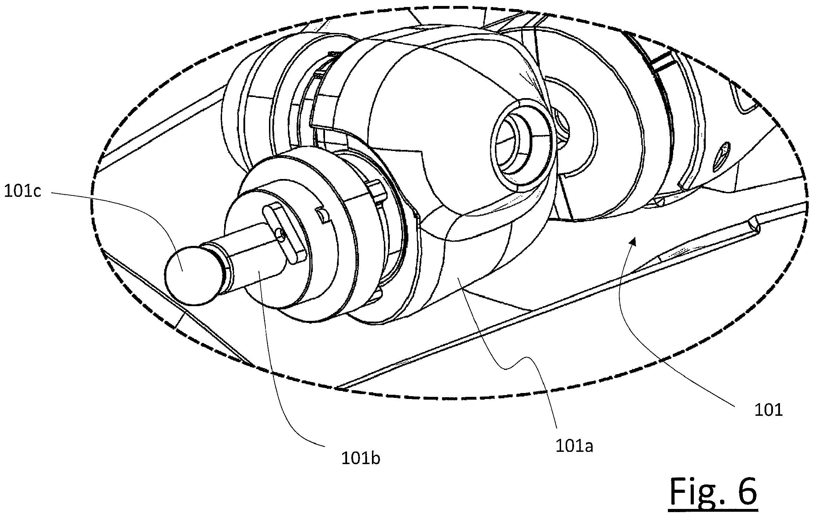

With reference to figure 6, the protrusion 101b comprises an expandable element 101c adapted to apply a pressure on the internal walls of the hollow portion 4a of the elements 4 for picking the ice cream up. For example the expandable element 101c, preferably made up of elastic material (for example rubber), is interposed between the end of the protrusion 101b and the head of a pin (not shown) that is sliding inside the element 101c and the protrusion 101b. The pin head can be moved from a position proximal to the end of the protrusion 101b to a position distal from the protrusion 101b, by means of actuators known in the art. When the pin head is brought towards the end of the protrusion 101b, the element 101c is squeezed between them, radially expanding in the direction along which the pin slides.

When the expandable element 101c is expanded, it applies a restraining force inside the hollow portion 4a, thus constraining the element 4 to the movable portion 101a of the first arm 101. When the expandable element 101c is contracted the element 4 is, vice versa, released from the movable portion 101a of the first arm 101.

The movable portion 101a can further be moved from a picking up position (shown in figure 8) to insert at least partially the element 4 for picking the ice cream up into one of the tubs 2 so that a loose ice cream portion 10 is picked up, to a preparation position (shown in figure 9) to arrange the ice cream portion picked up in a cone/cup 30 restrained by the restraining element 103. The first arm 101 preferably has at least seven degrees of freedom. However, further embodiments can provide for the first arm having at least three degrees of freedom, preferably at least five degrees of freedom, still remaining in the scope of protection of the present invention.

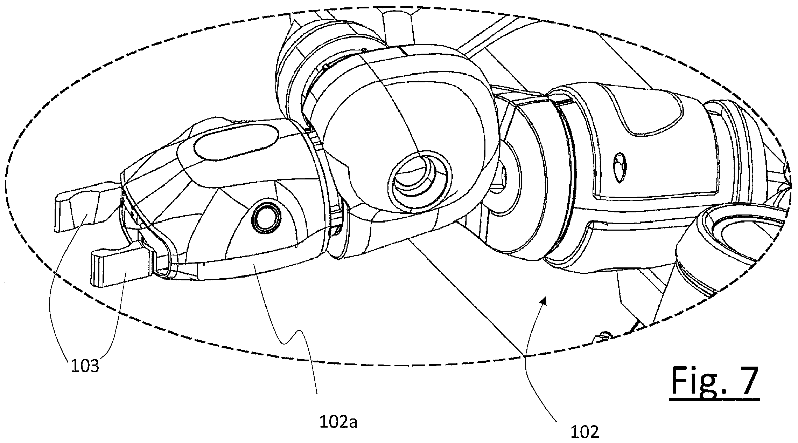

With reference to figure 7, the restraining element 103 is in the form of a clamp with variable width. In other words, the restraining element 103 has a clamp, the teeth of which are at a distance between each other that can be modified by specific movement means known in the art and not shown in detail in the figures. In general, the restraining element 103 thus has a shape that can be adapted to receive different types/widths of cones/cups 30.

As mentioned, according to a possible embodiment shown in the figures, the restraining element 103 to restrain the cone/cup 30 is constrained to the robot 100, and in particular to the body 110 of the robot 100. Preferably, the restraining element is constrained to a second movable arm 102 made substantially specular to the first arm 101. In other words, the first arm 101 and the second arm 102 substantially differentiate only for the type of component assembled on them, i.e. the male element 101b intended for the coupling with the picking up element 4 on the first arm 101, and the restraining element 103 on the second arm 102.

In alternative embodiments not shown in the figures, the restraining element can be fixed, or however integral, to the body 110 of the robot 100, or also it can be assembled on an arm having a number of degrees of freedom lower than the first arm 101 previously described.

Alternatively, the restraining element 103 could be arranged on an arm, or however on another movable or fixed element of the device 1 being outside the robot 100, provided it is designed so that a cone/cup 30 can be received from the stock 2, and so that it could cooperate with the first arm 101 during the introduction of the ice cream 10 previously picked up from the tub 2, into the cone/cup 30 restrained by the restraining element 103 itself.

The robot 100 is preferably constrained on a rotating base arranged between the delivery station 3 and the stations 20. The rotating base is arranged in order to direct the body 110 of the robot 100 among a plurality of operating positions. A logic control unit (not shown in the figures) manages the various movements of the robot 100, the rotating base, the tubs 2, the rotating platform 8, as well as the control of the various actuators for driving the restraining element 103, the male element 101b and the stock 5 that is delivering the cones and/or cups 30.

In particular, after the user has input the information on the ice cream type to be prepared (for example, the user can choose the type of cone or cup, the amount of ice cream, the number and type of flavors of the ice cream) by the means 7, the logic control unit drives the various movements depending on the information provided by the user by the receiving means 7.

For example, the clamp of the restraining element 103 is adjusted depending on the size of the cone or cup selected by the user, and after bringing the restraining element 103 at the stock 5 of the cones and/or cups 30 (for example by rotating the base on which the body 110 of the robot is constrained), the delivery of a cone or cup received in the restraining element is driven.

The logic unit drives the rotation of one or both stations 20 containing the tubs 2 wherein there are the flavors selected by the user, so that to move the tub with the ice cream selected by the user close to the robot 100.

The first arm 101 is brought to the recovery position so that the protrusion 101b of the movable portion 101a is inserted in the cavity 4a of the picking up element 4. After the expansion of the element 101c have been driven, the arm 101 is moved so that to remove the picking up element 4 from the supporting element 6. The movable portion 101a is then brought to the picking up position (shown in figure 8) so that a loose ice cream portion can be picked up from the tub 2. Preferably, the movement of the arm 101 during the picking up step is carried out depending on the type of flavor of the ice cream to be picked up. For example, the arm 101 carries out a succession of movements stored in a table previously obtained by means of experimental lab tests. For each tub 2 an ice cream flavor and the number of ice cream picking ups previously made are associated with. When the number of picking ups is equal to zero, the tub 2 will be provided with a determined amount of ice cream 10 arranged so to reach a determined level from the bottom of the tub 2. For each tub 2 a determined maximum number of ice cream picking ups is provided. Each number of carried out picking ups is associated with a particular succession of movements with which the movable portion 101a is moved, so that to consider the ice cream type (flavor and consistency) and the filling level of the tub (higher or lower with respect to the bottom).

Subsequently the first arm 101 is brought to a preparation position (shown in figure 9) to arrange the ice cream portion 10 picked up from the tub 2, in the cone or cup 30 restrained in the restraining element 103. Preferably, the second arm 102 is moved to move the restraining element 103 closer to the picking up element 4, so that movement of the first arm 101 to bring the movable portion 101a from the picking up position to the preparation position, is minimized.

After having arranged the ice cream portion 10 on the cone or cup 30, the logic control unit drives the movement of the movable portion 101a to the recovery position in order to constrain the picking up element 4 in the corresponding supporting element 6. After the contraction of the expandable element 101c has been driven, the logic control unit drives the movement of the first arm 101 towards the rest position.

If the ice cream to be prepared provides a further picking up of an ice cream portion having a flavor different from the first picking up, the logic unit drives the rotation of the station 2 and subsequently the previously described steps are repeated until completion of the preparation of the ice cream cone or cup required by the user.

Once the preparation of the ice cream cone/cup is completed, the rotating base on which the body 110 of the robot 100 is constrained, is rotated to direct the robot 100 towards the delivery station 3. The logic unit drives the movement of the second arm 102 so that to bring the cone or cup containing the ice cream on the seat 8a of the means 8. Subsequently, the teeth of the clamp of the restraining element 103 are taken apart, the second arm 102 is brought to the rest position and the platform 8 is rotated to deliver to the user the cone or cup 30 containing the ice cream.

The present invention has been described with reference to some embodiments. Different modifications can be made to the embodiments described in detail, still remaining within the scope of protection of the invention, defined by the following claims.

By way of example, the station 20 could have linear rectilinear development and the tubs 2 could also be arranged linearly in the station 20, each tub 2 being arranged adjacent to the next one.

In this case, the stock 5 of cones and/or cups 30 can be arranged at an end of the station 20.

The delivery station 3 can be provided at the remaining end of the station 20, i.e. at the end of the station 20 opposite to that one wherein the stock 5 is provided. Furthermore the robot 100, and in particular its body 110, in this case can be constrained to a track sliding along the station 20, so that to allow the robot 100 to translate along the track to come at the tub 2 containing the ice cream flavor/type to be picked up.

## Claims

1. Device (1) for preparing and delivering a cone or cup containing ice cream (10), comprising:
- a plurality of tubs (2) for containing the ice cream (10);
- a delivery station (3) for delivering a cone or cup (30) containing the ice cream (10);
- at least one element (4) for picking the ice cream up, preferably having the shape of scoop or spoon;
- a stock (5) of cones and/or cups (30);
- at least one restraining element (103), preferable a movable one, adapted to receive a cone or cup (30) from said stock (5);
- a robot (100), preferably of the substantially anthropomorphous type, equipped with a first arm (101) provided with a movable portion (101a) equipped with, or couplable to, at least one of said elements (4) for picking the ice cream (10) up;
- receiving means (7) to receive user's commands;
wherein said movable portion (101a) can be moved from a picking up position to insert at least partially said element (4) for picking up the ice cream in one of said tubs (2) so that a loose ice cream portion is picked up, and a preparation position to arrange said ice cream portion into one of said cones or cups (30) restrained in said restraining element (103).

2. Device (1) according to claim 1, wherein said first arm (101) has at least three degrees of freedom, preferably at least five degrees of freedom, more preferably at least seven degrees of freedom.

3. Device (1) according to one of the preceding claims, wherein one or more of said elements (4) for picking up the ice cream is reversibly couplable to said movable portion (101a) of said first arm (101), said device (1) comprising at least one supporting element (6) to support one or more of said elements (4) for picking up the ice cream, said movable portion (101a) of said first arm (101) being further movable to a recovery position of said element (4) for picking up the ice cream, in order to selectively constrain and release itself to/from said element (4) for picking up the ice cream.

4. Device (1) according to claim 3, wherein said supporting element (6) is designed so that said element (4) for picking up the ice cream is at least partially held inside one of said tubs (2).

5. Device (1) according to one of the preceding claims, wherein said tubs (2) are movable with respect to said robot (100).

6. Device (1) according to one of the preceding claims, wherein said restraining element (103) is mounted on the movable portion (102a) of a second arm (102).

7. Device (1) according to one of the preceding claims, wherein said robot (100) comprises a body (110) at least rotatably movable with respect to said plurality of tubs (2), said restraining element (103) and said first arm (101) being constrained to said movable body (110).

8. Device (1) according to claim 7, wherein said restraining element (103) and said first arm (101) are movably constrained, at least rotatably, to said movable body (110).

9. Device (1) according to one of the preceding claims, comprising at least one station (20) provided with at least one part of said tubs (2), said station (20) having a main development axis (A), said tubs (2) being rotatable around said main development axis (A).

10. Device (1) according to claim 9, wherein said station (20) has a substantially cylindrical shape.

11. Device (1) according to one of claims 9 or 10, comprising at least two of said stations (20).

12. Device (1) according to claim 11 when depending from claim 7, wherein said movable body (110) is arranged between said two stations (20).

13. Device (1) according to one of preceding claims 2 to 12, wherein said movable portion (101a) of said first arm (101) comprises a male element (101b) introducible into a female element (4a) of said element (4) for picking up the ice cream, or vice versa.

14. Method for preparing and delivering an ice cream cone or ice cream cup by a device according to one or more of the preceding claims, comprising the steps of:
(a) receiving a user's command by said receiving means (7), said command comprising at least one piece of information about the type of ice cream to be prepared;
(b) moving said first arm to said picking up position so that a portion of loose ice cream is picked up from said tubs, depending on said command received in said step (a);
(c) receiving or picking up a cone or cup (30) from said stock (5) in said restraining element (103);
(d) moving said first arm to a preparation position to arrange said ice cream portion into one of said cones or cups (30) restrained in said restraining element (103), depending on said command received in said step (a);
(e) delivering to a user said cone or cup (30) containing the ice cream prepared in said step (d).
